(19) Europäisches Patentamt
European Patent Office
Office européen des brevets

(11) EP 1 214 887 A1

(12) **EUROPEAN PATENT APPLICATION**

(43) Date of publication:
**19.06.2002 Bulletin 2002/25**

(51) Int Cl.7: **A23D 9/013**, A21D 2/16,
A21D 10/00, A21D 2/32

(21) Application number: **00204589.6**

(22) Date of filing: **18.12.2000**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **CSM Nederland B.V.
1000 AH Amsterdam (NL)**

(72) Inventors:
• **Smorenburg, Hermanus
2313 RJ Leiden (NL)**
• **Van der Schee, Gerrit
3235 TL Rockanje (NL)**

• **Vermeer-Mols, Linda Johanna Maria
2612 EC Delft (NL)**
• **Morrish, Deborah Mary
Great Sutton, Cheshire CH66 2GT (GB)**
• **Johnson, Michael Kenneth
Meols, Wirral CH47 0NN (GB)**

(74) Representative: **Jorritsma, Ruurd et al
Nederlandsch Octrooibureau
Scheveningseweg 82
P.O. Box 29720
2502 LS Den Haag (NL)**

(54) **Liquid bread improver**

(57) The present invention relates to a bread improver composition, comprising 30 to 94 % by weight, based on the weight of the total composition of an oil and/or oil mimetic component; 1 to 10 % by weight, based on the weight of the total composition, of a triglyceride fat; and a particulate component, comprising 5 to 40 % by weight, based on the weight of the total composition, of a high melting point emulsifier; and 0 to 60 % by weight, based on the weight of the total composition of further bread improver additives.

**Description**

Bread improver compositions include a variety of additives intended to improve the quality of bread and other bakers' goods, for example cake mixes, and for leavened and unleavened baked products generally. They include emulsifiers, enzymes, antioxidants, sugars, food acids and acidity regulators, milk solids and vitamins and may be accompanied by a proportion of flour to facilitate admixture with remaining bakery ingredients consisting largely of flour. Fats and/or liquid glyceride oils are also present.

It has been known for some time that it is desirable to provide a bread improver composition in a liquid form. The reason is that handling of these type of materials in powder form can be problematic. For instance, workers could breath in the powders. The powder can cause allergic reactions. Also, powders are more difficult to dose in industrial applications than fluid compositions. A prerequisite for liquid bread improver compositions is that they should be fluid at temperatures of about 5 to 25 °C and that they should be stable on storage at these temperatures, i.e. they do not separate into two distinct phases, including a precipitate and they keep their functionality over time.

WO 99/48377 relates to a composition comprising an oil and/or oil mimetic component; a triglyceride fatty acid and/or a high melting point emulsifier component and a particulate component. The particulate component is in a stable suspension within a crystal matrix formed by the triglyceride fatty acid. The drawback of a composition according to this document is that only a relative small amount of functional ingredients such as emulsifiers can be incorporated in the bread improver.

An object of the present invention is to provide a bread improver containing a relative high amount of functional ingredients such as emulsifiers, e.g. monoglycerides and diacetyl tartaric esters of mono and diglycerides. A further object is that such a bread improver is fluid, i.e. pumpable or pourable and that it is stable upon storage.

The present invention thus provides a liquid bread improver composition, comprising

(a) 30 to 94 % by weight, based on the weight of the total composition of an oil and/or oil mimetic component;
(b) 1 to 10 % by weight, based on the weight of the total composition, of a triglyceride fat; and
(c) a particulate component, comprising:
5 to 40 % by weight, based on the weight of the total composition, of a high melting point emulsifier; and
0 to 60 % by weight, based on the weight of the total composition of further bread improver additives.

The structure of the bread improver of the invention with this composition is a continuous fat phase having the particulate component dispersed therein. Although it is known according to the prior art to use a high melting point emulsifier as part of the triglyceride fat component (b), up to now it was not known to incorporate such an emulsifier as the particulate component dispersed in the fat phase.

The particulate component can be clearly distinguished from the fat phase. The average particle size of the particulate component is at least 10 μm. This means that at least 50 %, preferably at least 80 % of the particles has a particles has a particle size larger than 10 μm. The particle size can be determined with techniques known in the art, for instance a Malvern Laser Particle Counter.

A further characteristic of the particulate component is that, after processing, it does not substantially dissolve in components (a) and (b). This means that during preparation of the bread improver the particulate phase does not dissolve in components (a) and (b). In the final product less than 10 wt. %, preferably less than 5 wt. % of the amount of component (c) is dissolved.

The bread improver composition according to the invention is a stable suspension. The term "stable suspension" means that the composition has a sedimentation index (S.I.) of less than 50 %, preferably less than 20 %. The separation index is preferably greater than 70 %, more preferably greater than 90 %. Sedimentation index and separation index are determined according to protocol A and B of WO 99/48377, which is incorporated by reference.

The bread improver composition is further characterized by its rheological properties. The composition is liquid, i.e. pourable or pumpable. In particular the Bostwick value is at least 1 cm/30 sec, preferably at least 3 cm/30 sec, most preferably 4 cm/30 sec. The Bostwick value is determined in a Bostwick Consistometer, by measuring the distance which a sample of material flows under its own weight in 30 seconds at 20 °C. The lower the Bostwick value, the thicker the sample and the higher its consistency.

A further parameter determining rheological properties is the yield stress. The yield stress, determined as described hereafter is less than 150 Pa, preferably less than 100 Pa, most preferably less than 70 Pa. These properties are substantially maintained during storage at a temperature of about 15 °C. This means that for a period of at least 4 weeks, preferably at least 8 weeks no substantial changes in Bostwick value and yield stress occur and that they remain above, respectively below the threshold values given above.

The high melting point emulsifier is preferably characterized by a iodine value smaller than 20, in particular smaller than 10, most preferred smaller than 5, in particular 2. The dropping point of the emulsifier is higher than 50 °C, in particular higher than 60 °C. The high melting point emulsifier can also consist of a mixture of emulsifiers as long as the mixture also fulfils the above criteria for iodine value and dropping point.

Typical high melting point emulsifiers which fulfill the above criteria are diacetyl tartaric esters of saturated mono- and/or diglycerides or saturated monoglycerides. Diacetyl tartaric esters of saturated mono and/or diglycerides and saturated monoglycerides are commercially available. The monoglycerides need not necessarily be pure and can thus for instance contain diglycerides. Preferably these monoglyceride products contain at least 40 % monoglycerides. The monoglycerides can also be in the form of distilled monoglycerides which indicates a purity level of ca. 90 %.

The high melting point emulsifier is present in an amount of 5 to 40 % by weight, preferably more than 7 % by weight, most preferably at least 10 % by weight, based on the total weight of the bread improver composition.

The particulate component (c) including the high melting point emulsifier and optionally additives, has an average particle size of at least 10 μm. A smaller particle size may result in dissolution of the particulate component. The upper limit of the particle size is determined by sedimentation of the particulate component, and will generally be 1000 μm at the most.

Component (a) according to the invention is an oil and/or an oil mimetic component and is present in an amount of 40 to 94 % by weight, preferably 50 to 80 % by weight, based on the weight of the total composition.

The oil of component (a) is preferably a liquid, edible triglyceride oil. The oil displays a solid fat content of less than 10 % at 20 °C. The oil has preferably a iodine value of 20 to 210, preferably 80 to 140. Examples of suitable oils are sunflower seed oil, safflower oil, soy bean oil, rapeseed oil, maize oil, peanut oil, olive oil, cottonseed oil, olein fractions of natural oils, such as palm oil olein, interesterified oils and derivatives and mixtures thereof.

Although liquid, edible triglyceride oils are preferred, also "oil mimetic" component can be used. The term "oil mimetic" is a material that exhibits oil like properties. It is liquid and pumpable. The oil mimetic components can be an emulsifier, paraffin or oil substitute, preferably a liquid food emulsifier such as lecithin, sorbitan monooleate, sorbitan monolaurate, polysorbate, diacetyl tartaric esters of fatty acid mono-di glycerides, sucrose esters of fatty acids.

The triglyceride fat is characterized by a melting point higher than 50 °C, preferably higher than 60 °C. The triglyceride fat is preferably esterified with acids having a chain length of 4 to 24 carbon atoms. Its iodine value is preferably 0 to 5. The hard fat component of these blends must have the ability to form a crystal network in the compositions. The triglyceride fat is present in an amount of 1 to 10 % by weight, preferably less than 8 % by weight, more preferably less than 5 % by weight, based on the weight of the total composition.

The triglyceride fat is preferably selected from hardened triglyceride fat, such as hardened rapeseed oil, hardened sunflower seed oil, hardened soy bean oil, hardened palm oil, hardened fish oil, hardened maize oil, hardened peanut oil, hardened safflower oil, hardened olive oil, derivatives and mixtures thereof. The triglyceride fat can also be a fat fraction such as palm stearin. Preferably the triglyceride fat is a fully hardened fat, which means having a iodine value of less than 2.

The composition can further contain 0 to 60 % by weight, preferably 3 to 30 % by weight, based on the weight of the total composition, of commonly applied bread improver additives, including enzymes, salts, further emulsifiers, hydrocolloids, flavors, reductants, proteins, starches, minerals, vitamins, sweeteners, baking powders, flour, animal fat, acids, yeast, colorings, spices, herbs, gluten, preservatives, antioxidants and fibers.

The composition preferably comprises substantially no water, i.e. preferably less than 5 % by weight, more preferably less than 1 % by weight, in particular less than 0.5 % by weight, based on the weight of the total composition.

The bread improver composition can be prepared by methods known in the art. Typically at least components (a) and (b) will be combined and the temperature adjusted and maintained to allow formation of a fat matrix. Component (c) and optionally (d) will be added whilst the mixture is agitated. It is also possible to first mix a part of components (a) and (b) and to mix in the remaining parts of (a) and (b) together with component (c).

The composition of the invention can also be produced with a process similar to those used in the production of liquid margarine of shortening. Components (a), and (b) are combined and crystallized in a tube chiller. Component (c) is mixed in afterwards. Component (b), the triglyceride fat forms a strong crystal network which is still pumpable but strong enough to keep the particulate component (c) suspended in the oil.

Determination yield stress

Flow measurements can be used as a quick analysis of the flow behaviour of a dispersion. The viscosity of a liquid is determined as the shear stress divided by the shear rate. When the shear stress linearly varies with the rate, the liquid is called Newtonian; the viscosity is independent of the shear rate. The dispersion is said to be shear thinning when the viscosity of a dispersion decreases with increasing rate. The increase of the shear stress is no longer linear with the rate increase.

A further deviation from the ideal situation is when the dispersion should overcome a certain threshold stress value to start to flow: the yield value. This type of behaviour occurs for most of the liquid bread improvers as described in this invention. It can be described by the so-called Herschel-Bulkley analysis model, which fits a model equation through the data points. This model is expressed in the following equation:

$$\tau = \tau_0 + k\dot{\gamma}^n$$

where $\tau$ is the shear stress, $\tau_0$ is the yield stress, $k$ is a consistency constant, $\dot{\gamma}$ the shear rate, and $n$ the rate index.

If the yield stress is above a certain value, the dispersion is not regarded as pourable anymore.

Flow measurements can be performed with a Carrimed CLS[2] 500 rheometer from TA Instruments with a 6 cm stainless steel flat plate setting and a gap size of 1000 micrometer. Measurement temperatures are 15, 20 and 25 °C. In this plate-plate setting, the shear stress is increased with logarithmic ramp mode from 1 to 200 Pascal in 5 minutes and 45 seconds by increasing the shear rate (rotation speed of the upper plate) and back from 200 to 1 Pa in 5 minutes and 45 seconds. Shear stress is the controlled variable. Next the raw data are analyzed with the TA Instruments Rheology Solutions Software package DATA V1.2.2, data module 1994-1997. The value for yield stress is determined by analysing the shear rate and shear stress data in the range from 1 to 200 s-1 with the Herschel-Bulkley model.

## Claims

1. Liquid bread improver composition, comprising

   (a) 30 to 94 % by weight, based on the weight of the total composition of an oil and/or oil mimetic component;
   (b) 1 to 10 % by weight, based on the weight of the total composition, of a triglyceride fat; and
   (c) a particulate component, comprising:
   5 to 40 % by weight, based on the weight of the total composition, of a high melting point emulsifier; and
   0 to 60 % by weight, based on the weight of the total composition of further bread improver additives.

2. Composition according to claim 1, wherein the high melting point emulsifier has a iodine value smaller than 20, preferably smaller than 10.

3. Composition according to claim 1 or 2, wherein the high melting point emulsifier has a dropping point higher than 50 °C, preferably higher than 60 °C.

4. Composition according to claim 1, 2 or 3, wherein the high melting point emulsifier is a diacetyl tartaric ester of saturated mono- and/or diglycerides or a saturated monoglyceride.

5. Composition according to claim 4, wherein the high melting point emulsifier is a saturated monoglyceride.

6. Composition according to any of the preceding claims, wherein the triglyceride fat has a melting point higher than 50 °C.

7. Composition according to claim 6, wherein the triglyceride fat is a fully hardened fat.

8. Composition according to any of the preceding claims, wherein the high melting point emulsifier is present in an amount of at least 7 % by weight, preferably at least 10 % by weight.

9. Composition according to any of the preceding claims, wherein component (a) is a liquid vegetable oil.

10. Composition according to any of the preceding claims, wherein the particulate component (c) has an average particle size of at least 10 μm.

11. Process for the preparation of a composition according to any of the preceding claims, comprising combining at least components (a) and (b) and adjusting and maintaining the temperature to allow formation of a fat matrix and adding component (c) whilst the mixture is agitated.

## EUROPEAN SEARCH REPORT

**European Patent Office**

Application Number

EP 00 20 4589

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 572 051 A (UNILEVER PLC ;UNILEVER NV (NL)) 1 December 1993 (1993-12-01) * table I * | 1-4,6-9 | A23D9/013 A21D2/16 A21D10/00 |
| Y | * claims 1-3,5,9 * | 1-11 | A21D2/32 |
| Y | DATABASE WPI Derwent Publications Ltd., London, GB; AN 1984-111121 XP002167496 "Fluid oil and fat composition for bread production" & JP 59 051742 A (ASAHI DENKA KOGYO ), 26 March 1984 (1984-03-26) * abstract * | 1-11 | |
| A | DOOREN VAN C ET AL: "GROTE VARIATIE IN AANBOD EMULGATOREN" FOOD MANAGEMENT,NL,AMERSFOORT, vol. 15, no. 4, 1997, pages 20,25-29, XP000672920 * page 27-29; table 1 * | 2,3 | |
| A | DE 297 19 287 U (HENKEL KGAA ;UNILEVER NV (NL)) 26 March 1998 (1998-03-26) * claims 1,7,9 * | 1 | TECHNICAL FIELDS SEARCHED (Int.Cl.7) A23D A21D |

The present search report has been drawn up for all claims

| Place of search | Date of completion of the search | Examiner |
|---|---|---|
| THE HAGUE | 21 May 2001 | Piret-Viprey, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

5

**EP 1 214 887 A1**

**ANNEX TO THE EUROPEAN SEARCH REPORT
ON EUROPEAN PATENT APPLICATION NO.** EP 00 20 4589

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2001

| Patent document cited in search report | | Publication date | Patent family member(s) | | Publication date |
|---|---|---|---|---|---|
| EP 0572051 | A | 01-12-1993 | AT | 152880 T | 15-05-1997 |
| | | | AU | 3706093 A | 04-11-1993 |
| | | | CA | 2095131 A | 30-10-1993 |
| | | | DE | 69310611 D | 19-06-1997 |
| | | | DE | 69310611 T | 02-10-1997 |
| | | | JP | 6319431 A | 22-11-1994 |
| | | | JP | 7067362 B | 26-07-1995 |
| | | | US | 5362512 A | 08-11-1994 |
| | | | ZA | 9303025 A | 29-10-1994 |
| JP 59051742 | A | 26-03-1984 | JP | 1701929 C | 14-10-1992 |
| | | | JP | 3069488 B | 01-11-1991 |
| DE 29719287 | U | 26-03-1998 | DE | 19708165 A | 03-09-1998 |
| | | | EP | 0867116 A | 30-09-1998 |
| | | | EP | 0876763 A | 11-11-1998 |

EPO FORM P0459

For more details about this annex : see Official Journal of the European Patent Office, No. 12/82

6